# EUROPÄISCHE PATENTANMELDUNG

(11) **EP 1 270 465 A1**
(43) Veröffentlichungstag der Anmeldung: **02.01.2003**
(21) Anmeldenummer: 01114639.6
(22) Anmeldetag: 19.06.2001
(51) Int. Cl.: B65G 65/00, B65G 1/10

(54) **Verfahren und Vorrichtung zum Sortieren von Objekten**

(71) Anmelder: Siemens Schweiz AG, 8047 Zürich (CH)
(72) Erfinder: Boller, Manfred, 79801 Hohentengen (DE)
(74) Vertreter: Berg, Peter, Dipl.-Ing.

(57) **Zusammenfassung**

zum Sortieren von Objekten (10) wird ein Verfahren und ein als Objektspeicher (6) ausgebildete Vorrichtung vorgeschlagen, die wenigstens zwei Vertikalspeichereinheiten (1, 2) aufweist. Auf einer Abgabebahn (4, 5) werden einer Vertikalspeichereinheit (1) die zu sortierenden Objekte (10) zugeführt. Die Vertikalspeichereinheiten (1, 2) sind unabhängig voneinander vertikal verschiebbar, wobei eine Vertikalspeichereinheit (1) entsprechend dem Sortiervorgang für das Befüllen mit Objekten (10) vertikal verschoben wird und/oder die weitere Vertikalspeichereinheit (2) entsprechend einer Entnahme der Objekte (10) durch eine Person (3) vertikal verschoben wird. Auf diese Weise werden die zu sortierenden Objekte (10) schonend den einzelnen Speicherfächern (7) zugeführt. Der Wechsel zwischen Befüllen und Entnahme erfolgt durch Drehung um die Drehachse (9) der beiden Vertikalspeichereinheiten (1, 2). Mehrere Objektspeicher (6) können dadurch sehr platzsparend angeordnet werden.

## Beschreibung

Die vorliegende Erfindung betrifft ein Verfahren und eine Vorrichtung zum Sortieren von Objekten nach dem Oberbegriff des Patentanspruchs 1 bzw. 5.

Die Kommissionierung für den Versand von Objekten wie z.B. CD's (Compact Disk) oder von Büchern erfordert eine sorgfältige Behandlung, insbesondere bei der Bereitstellung von Liefereinheiten. Dazu müssen die einzelnen Objekte sortiert werden.

In DE 199 29 985 A1 ist ein Verfahren zum Verteilen von Stückgütern offenbart, dass de Stückgüter an einem Prüfplatz zunächst gruppenweise klassifiziert und dann auf Feldern eines Sammelplatz den klassifizierten Merkmalen entsprechend aufgeteilt werden und ggf. gruppenweise gestapelt werden. Dieses Verfahren wäre auch für das Sortieren von Büchern und CD's geeignet, es bedingt jedoch mit dem genannten Sammelplatz einen grösseren Raumbedarf.

Für das Sortieren von Stückgut mit wenigstens zwei planparallelen Flächen wird in EP 0 888 829 A2 eine Vorrichtung vorgeschlagen, die zum Sortieren eine drehbare Sortiertrommel mit mehreren Fächern aufweist. Diese Vorrichtung benötigt wenig Platz, nachteilig ist, das mit der vorgeschlagenen Vorrichtung nur Stückgut mit näherungsweise quadratischem Querschnitt sortierbar ist.

Der vorliegenden Erfindung liegt daher die Aufgabe zugrunde, ein Verfahren und eine Vorrichtung zum Sortieren von Objekten anzugeben, das wenig Platz benötigt und eine schonende Behandlung der Objekte gewährleistet.

Diese Aufgabe wird durch die im Patentanspruch 1 bzw. 5 angegebenen Massnahmen gelöst. Vorteilhafte Ausgestaltungen der Erfindung sind in weiteren Ansprüchen angegeben.

Dadurch dass für den Objektspeicher (6) wenigstens zwei unabhängig voneinander vertikal verschiebbare Vertikalspeichereinheiten (1, 2) mit Speicherfächern (7) vorgesehen sind, wobei eine Vertikalspeichereinheit (1) entsprechend dem Sortiervorgang für das Befüllen mit Objekten (10) vertikal verschoben wird und/oder die weitere Vertikalspeichereinheit (2) entsprechend einer Entnahme der Objekte (10) vertikal verschoben wird;
sind die zu sortierenden Objekte einer schonenden Behandlung ausgesetzt und durch die vertikale Anordnung der Speicherfächer benötigt eine Vorrichtung zur Durchführung des erfindungsgemässen Verfahrens einen geringen Flächenbedarf.

So können sich die folgenden Vorteile zusätzlich ergeben:
i) Dadurch dass die Vertikalspeichereinheiten (1, 2) rotationssymmetrisch angeordnet sind, wobei die Speicherfächer (7) von aussen zugänglich sind und dass nach erfolgter Befüllung einer Vertikalspeichereinheit (1 oder 2) der Objektspeicher (6) um eine Drehachse (9) gedreht wird;
   kann das Sortieren und die Entnahme der Objekte parallel erfolgen und erlaubt bei geringem Platzbedarf einen hohen Durchsatz von zu sortierenden Objekten (Patentanspruch 2).
ii) Dadurch dass das Befüllen der Speicherfächer (7) durch wenigstens eine Lichtschranke oder einen Näherungsschalter oder einen Taster überwacht und gesteuert wird; können mehrere Objekte einem Ziel zugeordnet werden, ohne dass ein Speicherfach überfüllt wird (Patentanspruch 3).
iii) Dadurch dass die Abgabebahn (4, 5) wenigstens eine Abgabe-Rollenbahn (5) aufweist, auf der die Geschwindigkeit der einem Speicherfach zuzuführenden Objekte (10) reduziert wird; ergibt sich ohne eine Durchsatzeinbusse eine besonders schonende Behandlung der zu sortierenden Objekte (Patentanspruch 4).
iv) Dadurch dass für eine Vorrichtung zur Durchführung des erfindungsgemässen Verfahrens Rollen vorgesehen sind, um die Vorrichtung insbesondere zwecks Wartung oder Reparatur durch eine andere zu ersetzen;
   kann die Anordnung von mehreren solchen Vorrichtung leicht an die Bedürfnisse eines Kunden angepasst werden (Patentanspruch 9).

Die Erfindung wird nachfolgend anhand der Zeichnung beispielsweise näher erläutert. Dabei zeigen:
- Figur 1: Ansicht/Schnitt eines erfindungsgemässen Objektspeichers mit der Zuführung der Objekte;
- Figur 2: Grundriss einer Anordnung von zwei erfindungsgemässen Objektspeichern.

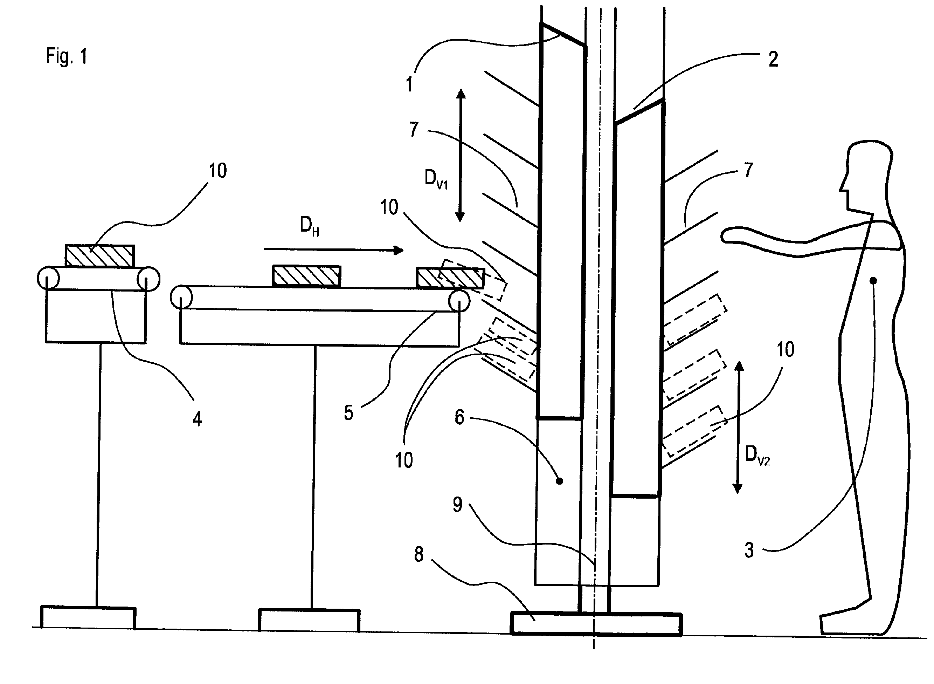

Figur 1 zeigt die als Objektspeicher 6 ausgebildete erfindungsgemässe Vorrichtung, die in zwei voneinander unabhängig vertikal verschieb- und positionierbare Vertikalspeichereinheiten 1 und 2 gegliedert ist. Im folgenden werden diese Einheiten 1 un 2 kurz als Vertikalspeicher 1 bzw. 2 bezeichnet. Ein solcher Vertikalspeicher 1 bzw. 2 weist mehrere Speicherfächer 7 auf. Der Abstand zwischen den Speicherfächern 7 ist vorzugsweise in einem Raster einstellbar, um die Grösse der Speicherfächer an die Grösse der Objekte 10 bzw. der zu erwartenden Höchstmenge an gestapelten Objekten 10 flexibel und an die Bedürfnisse des Endkunden anpassen zu können. Die Speicherfächer 7 sind in einem Winkel von etwa 20° geneigt, so dass die Objekte 10 sich einer stabilen Lage durch die Schwerkraft befinden. Nicht dargestellt in der Figur 1 ist die Antriebseinheit zur vertikalen Positionierung der Vertikalspeicher 1 und 2. Die Objekte 10 werden dem Objektspeicher 6 in diesem Ausführungsbeispiel über ein Abgaberollenband 4 und eine anschliessende Abgaberollenbahn 5 einem Speicherfach 7 in Richtung D_{H} zugeführt. Die vertikale Position des Vertikalspeichers 1 ergibt sich auf einer vorgängig, z.B. mit einem Leser, festgestellten Zuordnung von Objekt 10 zu einem bestimmten Speicherfach 7. Aufgrund dieser Zuordnung erfolgt eine Positionierung des Vertikalspeichers 1 gemäss der Richtung D_{V1} . Es ist auch möglich, die zu verteilenden Objekte 10 bereits in einer vorsortierten Reihenfolge dem Objektspeicher 6 zuzuführen, so dass das Beschicken z.B. in der Reihenfolge von unten nach oben erfolgt. In diesem Fall wird der Vertikalspeicher 1 sukzessive von oben nach unten bewegt. Je nach Ausstattung und Kundenanforderungen kann zur Zuführung der Objekte 10 auch nur ein Abgaberollenband 4 oder nur eine Abgaberollenbahn 5 vorgesehen sein. Abgaberollenbahnen 5 sind insoweit vorteilhaft, als die Zuführgeschwindigkeit der Objekte 10 soweit reduzierbar ist, dass dieses sehr schonend in ein Speicherfach 7 geschoben wird.

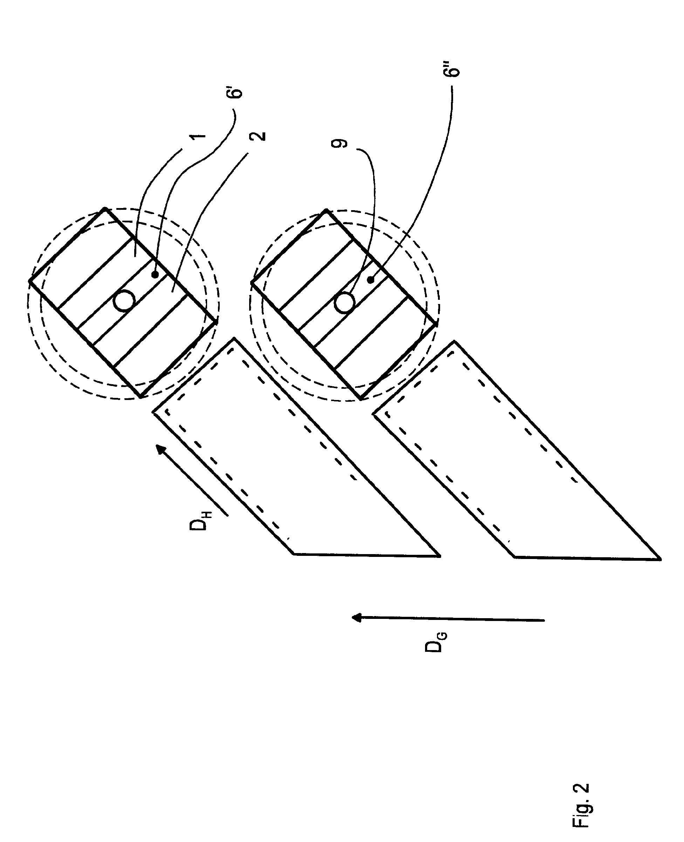

Sobald ein Vertikalspeicher - in der Disposition gemäss der Figur 1 der Vertikalspeicher 1 - gefüllt ist, wird der Objektspeicher 6 manuell oder automatisch um 180° bezüglich der Drehachse 9 gedreht. So erfährt das Beschicken des Objektspeichers mit den Objekten 10 praktisch keinen Unterbruch. Mit der Drehung wird ein leerer Vertikalspeicher bereitgestellt, in der Darstellung gemäss der Fig. 2 wäre diese der Vertikalspeicher 2. Eine Person 3 kann die sortierten Einheiten entnehmen und einem weiteren Schritt, z.B. der versandfähigen Verpackung zuführen oder diese Verpackung selber vornehmen. Aufgrund der Drehbarkeit des Objektspeichers 6 wird dieser oft auch als Drehspeicher 6 oder Drehspeichereinheit 6 bezeichnet.

In der Darstellung gemäss der Figur 1 steht der Objektspeicher 6 auf einem Fuss 8. Um einen möglichst flexiblen Einsatz solcher Objektspeicher 6 zu ermöglichen, kann in einer weiteren Ausführungsform vorgesehen sein, dass der Fuss 8 Rollen aufweist oder dass anstelle des Fusses 8 Rollen vorgesehen sind, um die Objektspeicher 6 je nach Bedarf oder bei Störungen leicht auswechseln zu können ist. Dazu ist in Fig. 2 eine typische Einsatzkonfiguration solcher Objektspeicher 6 gezeigt, in welcher zwei solche Objektspeicher 6' und 6'' nebeneinander angeordnet sind. Die zu sortierenden Objekte 10 werden auf einem Verteilband in Richtung D_{G} an die Abgabebahnen 4 bzw. 5 (in Fig. 2 nicht mit Bezugszeichen dargestellt) übergeben.

Da die Speicherfächer 7 mit unterschiedlich grossen Objekten 10 beschickt werden, können in einer weiteren Ausführungsform der Erfindung Lichtschranken vorgesehen sein, die den Füllungsgrad eines Speicherfaches 7 feststellen. Die Lichtschranken brauchen nicht pro Speicherfach vorgesehen zu werden, sondern können unmittelbar vor dem bzw. seitlich am Speicherfach 7 relativ zum Abgabe-Rollenband 5 fixiert angebracht sein. Zusammen mit der vertikalen Verschiebung eines Vertikalspeichers 1 oder 2 kann die Summe der Objekthöhe festgestellt werden und bei Bedarf ein weiteres Speicherfach 7 - für das gleiche Ziel - beschickt werden. Durch eine Anzeige auf der Seite der bedienenden Person können zusammengehörige Inhalte verschiedener, aufeinanderfolgender Speicherfächer 7 visualisiert werden. Diese Anzeige ist beispielsweise auch durch gleichfarbige LED's (Light emitting Diode) realisierbar, die je einem Speicherfach zugeordnet sind.

Anstelle der vorgenannten Lichtschranken zur Feststellung des Füllungsgrades eines Speicherfaches 7 können auch in einer anderen konstruktiven Ausgestaltung Näherungsschalter oder Taster vorgesehen sein.

Je nach Anforderungen und Sortiergut können anstelle von zwei Vertikalspeichern auch drei in einem Winkel von 120° versetzte Vertikalspeicher 1, 2 vorgesehen sein. Möglich ist jedoch generell eine Anordnung von n Vertikalspeichern, die je um einen Winkel von 360°/n versetzt angeordnet sind, eine solche Anordnung wird auch als rotationssymmetrische Anordnung bezeichnet.

### Liste der verwendeten Bezugszeichen

- 1: erste Vertikalspeichereinheit, Vertikalspeicher
- 2: zweite Vertikalspeichereinheit, Vertikalspeicher
- 3: Person
- 4: Abgabebahn, Abgabe-Rollenband
- 5: Abgabebahn, Abgabe-Rollenbahn
- 6: Vorrichtung zum Sortieren von Objekten, Objektspeicher, Drehspeichereinheit, Drehspeicher
- 7: Speicherfach
- 8: Fuss
- 9: Drehachse
- 10: Objekt, Sortiergut
- D_{V1}: Verschieberichtungen des ersten Vertikalspeichers
- D_{V2}: Verschieberichtungen des zweiten Vertikalspeichers
- D_{H}: Zuführungsrichtung der Objekte 10 zum Objektspeicher
- D_{G}: Zuführungsrichtung der Objekte zu den einzelnen Abgabe-Rollenbahnen oder Abgabe-Rollenbändern

## Patentansprüche

1. Verfahren zum Sortieren von Objekten (10), die auf einer Abgabebahn (4, 5) einem Objektspeicher (6) zugeführt (D_{H}) werden,
**dadurch gekennzeichnet, dass**
für den Objektspeicher (6) wenigstens zwei unabhängig voneinander vertikal verschiebbare Vertikalspeichereinheiten (1, 2) mit Speicherfächern (7) vorgesehen sind, wobei eine Vertikalspeichereinheit (1) entsprechend dem Sortiervorgang für das Befüllen mit Objekten (10) vertikal verschoben (D_{V1}) wird und/oder die weitere Vertikalspeichereinheit (2) entsprechend einer Entnahme der Objekte (10) vertikal verschoben (D_{V2}) wird.

2. Verfahren nach Anspruch 1,
**dadurch gekennzeichnet, dass**
die Vertikalspeichereinheiten (1, 2) rotationssymmetrisch angeordnet sind, wobei die Speicherfächer (7) von aussen zugänglich sind und dass nach erfolgter Befüllung einer Vertikalspeichereinheit (1 oder 2) der Objektspeicher (6) um eine Drehachse (9) gedreht wird.

3. Verfahren nach Anspruch 1 oder 2,
**dadurch gekennzeichnet, dass**
das Befüllen der Speicherfächer (7) durch wenigstens eine Lichtschranke oder einen Näherungsschalter oder einen Taster überwacht und gesteuert wird.

4. Verfahren nach einem der Ansprüche 1 bis 3,
**dadurch gekennzeichnet, dass**
die Abgabebahn (4, 5) wenigstens eine Abgabe-Rollenbahn (5) aufweist, auf der die Geschwindigkeit der einem Speicherfach zuzuführenden Objekte (10) reduziert wird.

5. Vorrichtung (6) zum Sortieren von Objekten (10), der eine Abgabebahn (4, 5) für das Zuführen der Objekte (10) zugeordnet ist,
**dadurch gekennzeichnet, dass**
wenigstens zwei unabhängig voneinander vertikal verschiebbare Vertikalspeichereinheiten (1, 2) vorgesehen sind, wobei eine Vertikalspeichereinheit (1) entsprechend dem Sortiervorgang für das Befüllen mit Objekten (10) vertikal verschiebbar (D_{V1}) ist und/oder die weitere Vertikalspeichereinheit (2) entsprechend einer Entnahme der Objekte (10) vertikal verschiebbar (D_{V2}) ist.

6. Vorrichtung nach Anspruch 5,
**dadurch gekennzeichnet, dass**
die Vertikalspeichereinheiten (1, 2) rotationssymmetrisch oder einander gegenüberliegend angeordnet sind, wobei die Speicherfächer (7) von aussen zugänglich sind und dass die Vorrichtung (6) um eine Drehachse (9) drehbar ist.

7. Vorrichtung nach Anspruch 5 oder 6,
**dadurch gekennzeichnet, dass**
eine Lichtschranke oder ein Näherungsschalter oder ein Taster für die Ueberwachung und Steuerung des Befüllens der Speicherfächer (7) vorgesehen ist.

8. Vorrichtung nach einem der Ansprüche 5 bis 7,
**dadurch gekennzeichnet, dass**
die Abgabebahn (4, 5) wenigstens eine Abgabe-Rollenbahn (5) aufweist, auf der die Geschwindigkeit der einem Speicherfach (7) zuzuführenden Objekte (10) reduzierbar ist.

9. Vorrichtung nach einem der Ansprüche 5 bis 8,
**dadurch gekennzeichnet, dass**
Rollen vorgesehen sind, um die Vorrichtung insbesondere zwecks Wartung oder Reparatur durch eine andere zu ersetzen.
